(19) **Europäisches Patentamt**

**European Patent Office**

**Office européen des brevets**

(11) **EP 1 218 820 B1**

(12) **FASCICULE DE BREVET EUROPEEN**

(45) Date de publication et mention
de la délivrance du brevet:
**16.11.2005 Bulletin 2005/46**

(21) Numéro de dépôt: **00966243.8**

(22) Date de dépôt: **29.09.2000**

(51) Int Cl.$^7$: **G06F 9/46**

(86) Numéro de dépôt international:
**PCT/FR2000/002712**

(87) Numéro de publication internationale:
**WO 2001/027756 (19.04.2001 Gazette 2001/16)**

(54) **PROCEDE DE PLACEMENT AUTOMATIQUE DES TACHES D'UNE APPLICATION DANS UNE MACHINE DE TRAITEMENT DE SIGNAL**

VERFAHREN ZUR AUTOMATISCHEN ANORDNUNG DER AUFGABEN EINER ANWENDUNG IN EINER SIGNALVERARBEITUNGSMASCHINE

AUTOMATIC APPLICATION TASK PLACEMENT PROCEDURE IN A SIGNAL PROCESSING MACHINE.

(84) Etats contractants désignés:
**DE GB NL**

(30) Priorité: **08.10.1999 FR 9912574**

(43) Date de publication de la demande:
**03.07.2002 Bulletin 2002/27**

(73) Titulaire: **Thales Underwater Systems SAS
06903 Sophia Antipolis (FR)**

(72) Inventeur: **DEMEURE, Alain,
Thomson-CSF Prop Int, Dept Brevets
94117 Arcueil Cedex (FR)**

(74) Mandataire: **Dudouit, Isabelle
Marks & Clerk France
31-33 Avenue Aristide Briand
94117 Arcueil Cedex (FR)**

(56) Documents cités:
**EP-A- 0 819 279        FR-A- 2 748 138**

- **P. BOULET ET AL: "Une approche à la SQL du traitement de données intensif dans GASPARD" RENPAR'11, 8 - 11 juin 1999, pages 1-6, XP002140826 Rennes, France**
- **C. GUETTIER: "Optimisation globale du placement d' applications de traitement du signal sur architectures parallèles utilisant la programmation logique avec contraintes; chapitre 2" THESE ECOLE DES MINES DE PARIS, 12 décembre 1997 (1997-12-12), pages 41-68, XP002140827**
- **C. ANCOURT ET AL: "Automatic Data Mapping of Signal Processing Applications" ASAP 97, 14 juillet 1997 (1997-07-14), XP002135742 Zurich, Switzerland**

**Description**

La présente invention se rapporte aux procédés de placement automatique des tâches d'une application dans une machine de traitement de signal, plus particulièrement dans une machine fonctionnant à partir d'un procédé de saisie graphique connu sous le nom de "ARRAY-OL" . Ce procédé est plus particulièrement décrit dans les deux demandes de brevet suivantes, déposées au nom de la demanderesse.

Dans la première de ces demandes de brevet, publiée sous le n° FR 2 732 787, la demanderesse a décrit et revendiqué un procédé de saisie graphique en deux dimensions destiné à être utilisé pour saisir des données numériques structurées en tableau.

Dans la deuxième de ces demandes de brevet, publiée sous le n° FR 2 748 138, la demanderesse a décrit et revendiqué un procédé de codage complétant le procédé précèdent et basé sur une structure de tableaux en "grains de calculs ", pour aboutir à une forme littérale dite "Q/D".

Par ailleurs, dans une demande de brevet publiée sous le n° FR 2 790 847, la demanderesse a décrit et revendiqué une variante du premier de ces deux brevets, enrichi par un système de hiérarchie permettant de décomposer en niveaux successifs les détails d'une application.

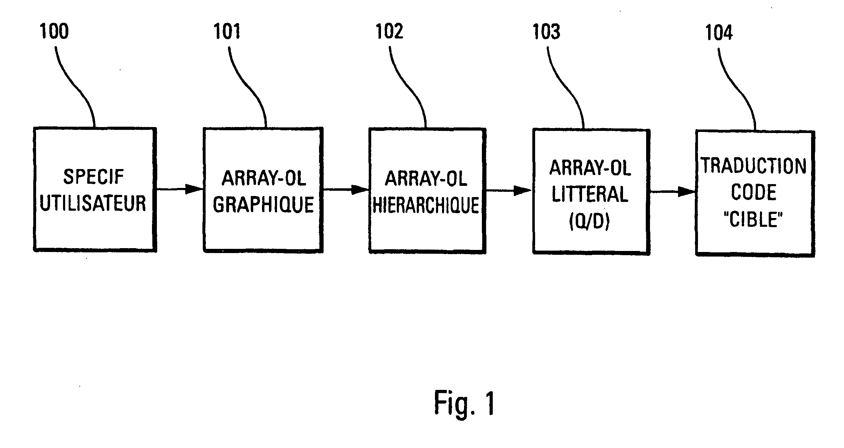

La figure 1 représente le procédé de placement selon l'art antérieur permettant de passer de la spécification utilisateur au code exécutable par la machine cible appelé "code cible". Dans ce procédé, l'utilisateur met tout d'abord en oeuvre le procédé dit "ARRAY-OL graphique", à la première étape 101 correspondant à l'invention décrite et revendiquée dans le brevet FR 27 32 787 cité ci-dessus. Le principe du procédé de saisie graphique décrit dans ce brevet met en oeuvre un tableau application opérande 30, un tableau d'application résultat 31, ainsi qu'une application élémentaire 32 avec ses motifs d'entrée 33 et ses motifs de sortie 34. L'application élémentaire met en oeuvre une transformation élémentaire symbolisée par F, par exemple une FFT, opérant sur une suite d'échantillons temporels pour élaborer une suite de raies fréquentielles. Cette représentation suppose qu'au moins le motif résultat soit structuré en tableau et que pour exécuter complètement la transformation on itère la transformation élémentaire autant de fois que nécessaire pour que le tableau résultat soit entièrement rempli par des ensembles de points identiques à l'ensemble de points correspondant au motif de sortie. Tout se passe comme si, à chaque itération de la transformation élémentaire, on ajoutait un "pavé" contribuant à la construction du tableau résultat. Un pavé est équivalent à l'ensemble des points correspondant à un motif placé (au sens anglo-saxon de "mapped") sur un tableau. La position où l'on place le pavé résultat définit la position du pavé opérande correspondant. Il met ensuite en oeuvre le procédé dit "ARRAY-OL hiérarchique", à la deuxième étape 102 correspondant à la demande de brevet FR 2 790 847 citée ci-dessus. Puis les informations fournies par 102 sont traduites de manière automatique par le procédé dit "ARRAY-OL littéral" ou "Q/D" à la troisième étape 103 correspondant au brevet FR 2 748 138 cité ci-dessus. Il passe ensuite à la dernière étape 104 consistant à convertir les informations fournies par 103 dans le code cible.

L'inconvénient du procédé réside dans le fait que l'étape 102 nécessite une intervention humaine. L'enseignement technique du document de P.BOULET et al intitulé << une approche à la SQL du traitement des données intensif dans GASPARD'RENPAR'11, 8-11 juin 1999, pages 1-6,XP002140826, France, concerne une approche du traitement de données intensif inspiré du langage SQL proposant un langage de description de composantes irrégulières. Les liens évoqués dans ce document entre les tableaux et les composants expriment des dépendances à partir desquelles un schéma d'exécution peut être mis en place.

Le document de C.GUETTIER intitulé « Optimisation globale du placement d'applications de traitement du signal sur architectures parallèles utilisant la programmation logique avec contraintes ; chapitre 2' thèse Ecole des Mines de Paris, 12 décembre 1997, pages 41-68, XP002140827 concerne le placement des applications de traitement du signal. Dans ce document les programmes numériques sont exprimés à l'aide de nids de boucles imbriqués. Les accès aux tableaux sont des fonctions affines des itérateurs de boucles ce qui place dans un contexte de placement à niveau fin de granularité.

Le procédé selon l'invention permet d'éviter l'intervention humaine de l'étape 102 précitée, et donc d'automatiser le procédé dès la sortie de 101.

Pour obtenir cette automatisation, l'invention propose un procédé de placement automatique des tâches d'une application dans une machine de traitement de signal comprenant une première étape mettant en oeuvre le procédé connu dit "ARRAY-OL graphique" suivie d'une deuxième étape mettant en oeuvre le procédé connu dit "ARRAY-OL Q/D", principalement caractérisé en ce qu'il est suivi d'une troisième étape mettant en oeuvre un procédé utilisant des Opérateurs de Distribution de Tableau, dits ODT, formés d'une chaîne d'Opérateurs Elémentaires, dits OE, séparés par des espaces de liaison, pour décrire les connexions entre les éléments d'un espace Emetteur $N^e$ , et les éléments d'un espace Récepteur $N^r$.

Selon une autre caractéristique, il utilise 8 Opérateurs Elémentaires OE dont 4 sont directs et 4 sont les miroirs des directs et qui correspondent aux actions suivantes :

- un Opérateur Elémentaire "Gabarit" qui sert à définir les tailles de tableaux et dont les actions sont "Coupe" et "Prolonge";

- un Opérateur Elémentaire "Modulo", qui permet de ramener les accès à l'intérieur des tableaux et dont l'action est "Fait converger".
- un Opérateur Elémentaire "Shift", qui permet de rendre compte des "pavages" ne partant pas sur l'origine du tableau et dont l'action est "Prolonge";
- un Opérateur Elémentaire "Projection", qui permet d'établir des connexions entre un espace d'entrée Nf et un espace de sortie Nt et dont les actions sont "Prolonge" et "Fait converger";
- un Opérateur Elémentaire miroir "Gabarit$^{-1}$" qui permet de prolonger ou de couper à paramétrage identique les mêmes connexions que l'Opérateur Elémentaire "Gabarit";
- un Opérateur Elémentaire "Eclatement", correspondant à l'opérateur miroir "Modulo$^{-1}$", qui fonctionne à l'inverse de l'OE "Modulo" et dont les actions sont "Coupe" et "Multiplie";
- un Opérateur Elémentaire "Shift$^{-1}$", qui est le miroir d'un Shift direct avec des paramètres de signe opposé; et
- un Opérateur Elémentaire "Segmentation", qui est le miroir de l'opérateur Projection et qui permet de tronçonner un ensemble d'éléments successifs sur une même dimension, et dont les actions sont "Multiplie" et "Coupe".

D'autres particularités et avantages de l'invention apparaîtront clairement dans la description suivante, présentée à titre d'exemple non limitatif en regard des figures annexées qui représentent :

- la figure 1, un organigramme de la chaîne du procédé selon l'art antérieur;
- la figure 2, un organigramme de la chaîne du procédé selon l'invention;
- la figure 3, une illustration de la définition des opérateurs de distribution de tableau, dits ODT;
- la figure 4, une illustration graphique de l'utilisation de ces ODT;
- la figure 5, un exemple d'écriture en ODT des connexions entre un espace résultat et un espace Q/D complet;
- la figure 6, un exemple de représentation de tâches successives sous la forme d'une "macro-tâche";
- la figure 7, un exemple d'écriture en ODT d'une tâche ARRAY-OL.

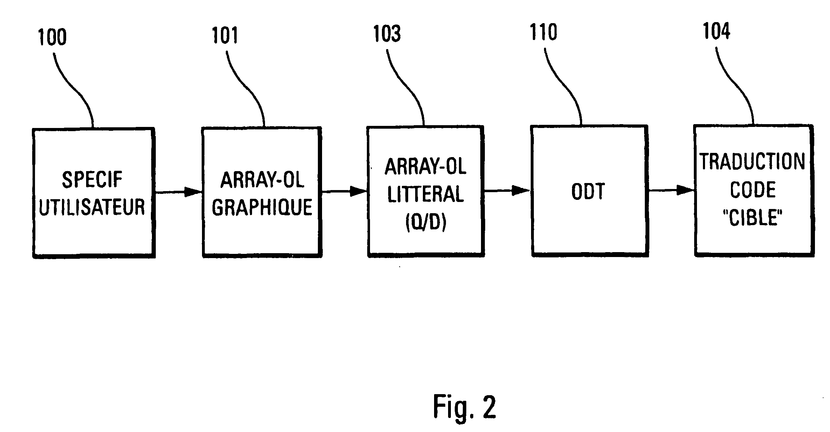

La figure 2 représente la suite des étapes du procédé selon l'invention. L'utilisateur met en oeuvre le procédé "101" comme précédemment. Puis, sans passer par l'étape 102, les informations sont traduites directement par le procédé "103". Selon l'invention, les informations sont ensuite traitées par le procédé dit "ODT" en 110, ODT étant l'abréviation de Opérateurs de Distribution de Tableau. Puis les informations obtenues sont, comme auparavant, converties dans 104.

On comprendra donc que les "ODT" constituent un outil permettant, lorsqu'ils sont utilisés dans le cadre du procédé général "ARRAY-OL", de hiérarchiser de manière automatique comme cela était mis en oeuvre "manuellement" dans l'art antérieur en 102.

Avec les "ODT", on décrit sous une forme mathématique très raccourcie les relations, ou connexions, entre les éléments d'un espace émetteur $N^e$ et les éléments d'un espace récepteur $N^r$. Pour une tâche donnée, le tableau contenant les éléments opérandes est un sous-ensemble de $N^e$, de même que le tableau contenant les éléments résultats est un sous-ensemble de $N^r$. La forme mathématique met en oeuvre les fonctions classiques d'une algèbre linéaire multidimensionnelle en nombres entiers, ainsi que des fonctions nouvelles représentant le "miroir" d'opérations classiques et qui sont particulièrement originales dans l'invention. On obtient ainsi des expressions mathématiquement manipulables qui rendent compte des hiérarchisations, des volumes de calcul et des volumes de données stockées ou échangées entraînés par ces hiérarchisations.

Ainsi avec l'invention les critères permettant de guider la qualité d'un placement sur une machine d'une application de traitement de signal, dite application de TS, deviennent calculables.

Les "Opérateurs de Distribution de Tableau", ou ODT, sont formés d'Opérateurs Elémentaires" ou OE.

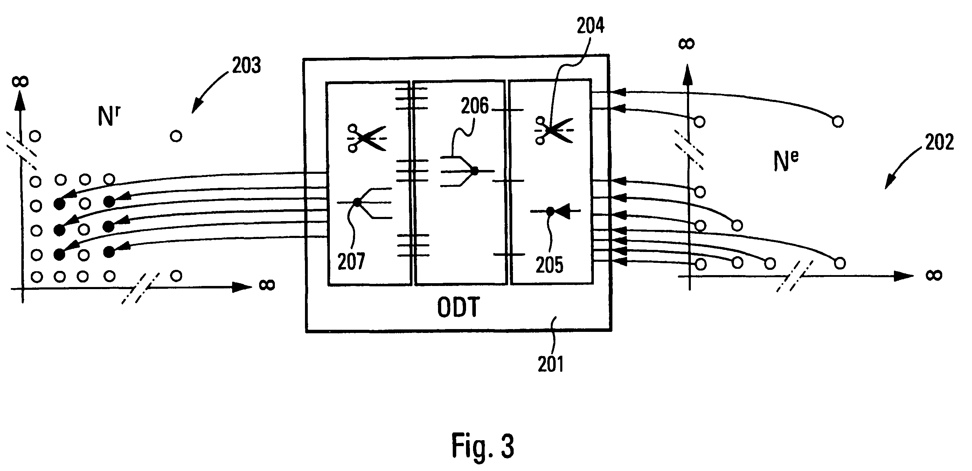

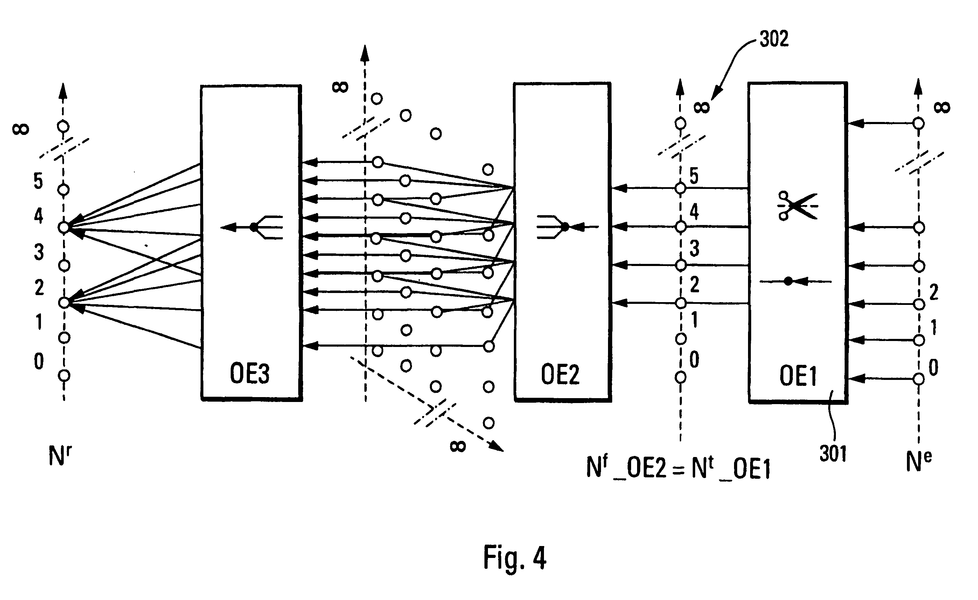

Les ODT vont être décrits à partir des définitions représentées sur les figures 3 et 4.

Ils permettent de décrire des connexions entre éléments de tableaux et plus précisément entre les éléments d'un espace Emetteur $N^e$ 202 et un espace Récepteur N'203 de dimension r.

En particulier, un ODT 201 décrit quels sont les éléments de $N^e$ connectés à des éléments de $N^r$ et dans ce cas lesquels.

Un ODT est constitué d'une chaîne d'Opérateurs Elémentaires OE tels que 301 séparés implicitement par des espaces $N^d$ tels que 302.

Par convention, dans les expressions, ou les dessins, l'espace Emetteur $N^e$ est à droite, les connexions se propagent de droite à gauche, et l'espace Récepteur $N^r$ est à gauche.

Les dimensions des deux espaces vus par un OE, c'est à dire $N^f$ en entrée ("From") et $N^t$ en sortie ("TO"), font partie de son paramétrage. Deux OE consécutifs doivent avoir des dimensions d'espaces ("To" pour l'un, "From" pour le suivant) identiques.

Un OE accomplit une seule action sur un lien entre éléments.

Un OE peut soit couper, selon le symbole 204, soit prolonger, selon le symbole 205, soit multiplier, selon le symbole 206, soit encore faire converger, selon le symbole 207, les connexions reçues de l'espace à sa droite, mais uniquement ceux des éléments déjà atteints par une ou plusieurs connexions émises par l'OE le précédant.

Les éléments de l'espace Emetteur ($N^e \equiv N^f$ de l'OE le plus à droite) sont au départ tous pourvus d'une connexion.

Pour pouvoir dire non seulement à quels éléments de $N^t$ est connecté un élément de $N^f$, mais aussi à quels éléments de $N^f$ est connecté un élément de $N^t$, à chaque OE est associé un OE "miroir" altérant les connexions de la même façon que l'OE direct mais en permutant entrées et sorties.

Pour décrire dépendances, distribution ou placement, 8 OE, soit 4 OE directs et 4 OE miroirs, s'avèrent suffisants. Entre direct et miroir, on choisit de considérer comme direct l'OE réalisant l'opération la plus familière, ce qui conduit au tableau suivant :

| DIRECT | MIROIR |
|---|---|
| Gabarit | Gabarit $^{-1}$ |
| Modulo | Modulo$^{-1}$ ou Eclatement |
| Shift | Shift$^{-1}$ |
| Projection | Segmentation |

L'OE Gabarit sert essentiellement à définir des tailles de tableau. Cet OE a un $N^f$ et un $N^t$ de mêmes dimensions.

Le Gabarit est représenté par un vecteur de doublets d'entiers (l,u); il est identifié par le symbole G. On a: $l_i \geq 0, u_i > l_i$. Souvent les $l_i$ sont nuls et peuvent alors ne pas figurer.

Une connexion est établie entre un élément f et un élément t, tous deux de mêmes indices, si pour tout i : $l_i \leq f_i < u_i$.

Les actions de l'OE Gabarit sont "Coupe" (symbole 204), "Prolonge" (symbole 205).

A titre d'exemple, pour une dimension f= t= 3 on a :

L'OE Modulo sert essentiellement à toujours ramener, pour les mettre "à la taille", les accès à l'intérieur des tableaux. Cet OE a un $N^f$ et un $N^t$ de même dimensions.

Le modulo est représenté par un vecteur d'entiers (m); il est identifié par le symbole M. On a : m $m_i \geq 1$.

Une connexion est établie entre un élément f et un élément t avec pour tout i : $t_i = (tf_i) \bmod m_i$.

L'action de l'OE Modulo est "Fait converger" (symbole 207).

A titre d'exemple, pour une dimension pour f = t = 3 on a :

L'OE Shift sert essentiellement à rendre compte des "pavages", tels que définis dans le brevet 95 04175 cité plus haut, ne partant pas sur l'origine du tableau. Cet OE a un $N^f$ et une $N^t$ de memes dimensions.

Le shift est représenté par un vecteur d'entiers (s), il est identifié par le symbole S. Les $s_i$ peuvent être négatifs.

Une connexion est établie entre un élément f et un élément t avec pour tout i : $t_i = f_i + s_i$

L'action de l'OE Shift est "Prolonge" (symbole 205).

A titre d'exemple, pour f = t = 3 on a :

$$\begin{vmatrix} 0 \\ 16 \\ 0 \\ \\ S \end{vmatrix}$$

L'OE Projection correspond à la forme la plus simple de distribution d'un espace $N_f$ vers un espace $N_t$, comme par exemple la distribution de Q/D sur le tableau résultat, comme défini dans le brevet 96 05 325 cité plus haut.

Cet OE est défini par une matrice de coefficients $W_{i,c}$ usuellement entiers. La projection établit des connexions entre un espace $N_f$ dont la dimension est le nombre de colonnes et un espace $N_t$ dont la dimension est le nombre de lignes. Un élément f est connecté à un élément t tel que :

$$t = |\,W_{i,c}\,|.\,f$$

Les actions de l'OE Projection sont "Prolonge", "Fait converger".

A titre d'exemple, pour f = 4 et t= 3 on a :

$$\begin{vmatrix} 96 & 32 & 0 & 0 \\ 0 & 0 & 4 & 0 \\ 0 & 0 & 0 & 1 \end{vmatrix}$$

Pour l'OE miroir Gabarit[-1], à paramétrage identique, Gabarit et Gabarit[-1] prolongent ou coupent les mêmes connexions :

$$\begin{vmatrix} I,u \\ G^{-1} \end{vmatrix} \equiv \begin{vmatrix} I,u \\ G \end{vmatrix}$$

A titre d'exemple, on a :

$$\begin{vmatrix} \infty \\ 32,64 \\ 128 \\ \\ G^{-1} \end{vmatrix} \equiv \begin{vmatrix} \infty \\ 32,64 \\ 128 \\ \\ G \end{vmatrix}$$

L'OE miroir Modulo$^{-1}$, ou Eclatement, est, comme le Modulo, représenté par un vecteur d'entiers (m) identifié par un M$^{-1}$.

Une connexion est maintenue entre un élément f et un élément t si pour tout i : $f_i < m_i$ avec $f_i = (t_i)$ mod. $m_i$, ou coupée si $f_i \geq m_i$.

Les actions de l'OE Modulo$^{-1}$ sont "Coupe ", "Multiplie" (symbole 206).

A titre d'exemple, pour une dimension f = t = 3 on a :

$$\begin{vmatrix} \infty \\ 64 \\ 128 \\ \\ M^{-1} \end{vmatrix}$$

L'OE miroir Shift$^{-1}$ est équivalent à un Shift direct avec des paramètres de signe opposé.

A titre d'exemple, pour f = t = 3 on a :

$$\begin{vmatrix} -4 \\ -16 \\ 0 \\ \\ S^{-1} \end{vmatrix} \equiv \begin{vmatrix} 4 \\ 16 \\ 0 \\ \\ S \end{vmatrix}$$

L'OE miroir Segmentation a été nommé ainsi car cet OE permet de tronçonner un ensemble d'éléments successifs sur une même dimension en "segments".

Une Segmentation est caractérisée par un tableau 2D contenant les mêmes entiers $W_{i,c}$ suivant la même disposition en lignes et colonnes que la matrice Projection dont cet OE est le miroir. La représentation utilisée est la suivante :

$$t = \overline{\underline{\quad W_{i,c} \quad}} \; .f$$

N$^f$ (resp.N$^t$) a une dimension égale au nombre de lignes (resp. au nombre de colonnes) de ce tableau 2D. Un élément f est connecté à un élément t si:

$$f = | W_{i,c} |. t$$

Les actions de l'OE Segmentation sont "Multiplie", "Coupe".

On remarquera qu'une colonne de 0 équivaut à la création d'une dimension .

A titre d'exemple, pour f = 3 et t = 5 on a :

| 96 | 32 | 0 | 0 | 0 |
|----|----|---|---|---|
| 0  | 0  | 4 | 0 | 0 |
| 0  | 0  | 0 | 1 | 0 |

On rappellera ici que la forme littérale Q/D est décrite dans le brevet 96 05325 cité plus haut, où l'on remarque que Q et D représentent des dimensions.

Une dimension Q a pour taille une dimension du tableau résultat (S'il y a en plusieurs, on privilègie le "Maître") divisée par la taille de la dimension du motif ajustée parallèlement à la dimension du Maître. Elle représente un quotient, avec la restriction que si Q=1 la dimension est annulée. Une dimension D est une dimension du motif résultat appliqué au "Maître"; elle représente un diviseur et est étendue au motif opérande.

Un tableau Q/D rassemble les dimensions Q et les dimensions D des motifs résultats et des motifs opérandes. Un point de ce tableau est repéré par un vecteur d'indices q,d. Lorsqu'il est multiplié par des matrices, le vecteur, q,d permet de trouver les éléments lus ou écrits dans les tableaux considérés par la tâche en cours. Ces matrices contiennent les coefficients correspondant aux pas d'ajustage (a) et de pavage (p) tels que définis dans le brevet 96 05325. Elles contiennent des colonnes de "0" permettant d'ignorer les indices correspondant aux motifs placés sur d'autres tableaux.

Ainsi, dans le modèle Q/D, la spécification d'une tâche se résume aux paramètres donnant les dimensions et les tailles du tableau Q.D, le contenu des matrices, les dimensions et les tailles des tableaux opérandes, et le vecteur d'offset qui est ajouté au vecteur obtenu après multiplication de q,d par la matrice de projection opérande.

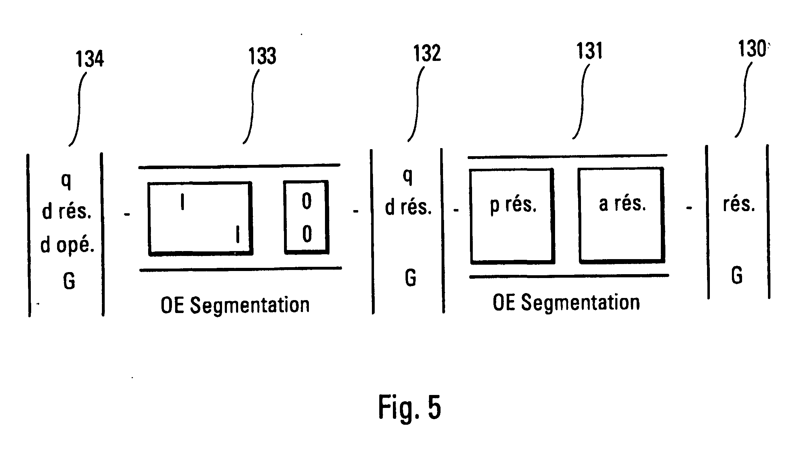

Dans ces conditions, on a représenté sur la figure 5 l'écriture en ODT des connexions entre l'espace résultat et l'espace Q/D complet (c'est à dire portant sur les tableaux résultats et opérandes).

Un OE "Gabarit" 130 définit un tableau résultats qui est appliqué à un OE "Segmentation " 131 pour lequel les entiers $W_{i,c}$ sont répartis en 2 sous-matrices. Une première sous-matrice comprend a rés. qui représente les valeurs des pas d'ajustage sur le tableau résultat et p rés. qui représente les valeurs des pas de pavage. Ces valeurs vérifient des relations respectivement avec d rés. et q.

Après l'OE "Gabarit" (132), on obtient un tableau limité au motif résultat. Ce tableau est appliqué à un deuxième OE "Segmentation" (133) où les colonnes de "0" permettent de créer les dimensions d'opérandes dont les tailles sont définies dans le gabarit à gauche.

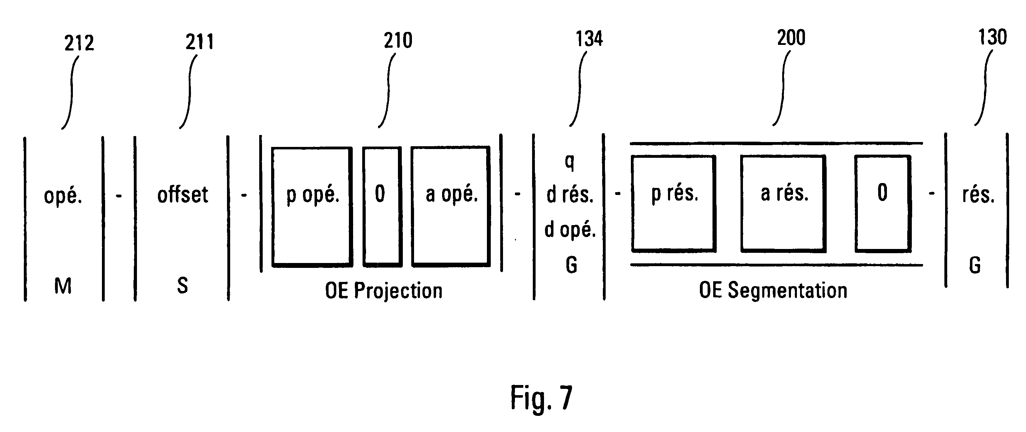

Après l'OE "Gabarit" 134, on obtient un tableau complet. Les tirets qui séparent les OE désignent une concaténation. Le gabarit intermédiaire peut être supprimé et on peut remplacer les 2 segmentations consécutives par leur produit en se ramenant ainsi à un seul OE "Segmentation" comme représenté dans l'exemple de la figure 7 en 200. Sur cette figure, on a également représenté les connexions entre l'espace Q/D complet et l'espace opérande. Les OE successifs sont : "Projection" 210, où la colonne "0" permet "d'éliminer" les dimensions des motifs résultats, "Shift" 211 qui permet de tenir compte de l'offset, c'est à dire du fait que les motifs opérandes à la première itération ont une origine qui n'est pas placée sur celle du tableau, et enfin "Modulo" 212 pour tenir compte du rebouclage des dimensions introduit par ARRAY-OL. Ceci correspond par exemple aux données provenant des signaux des capteurs d'une antenne cylindrique.

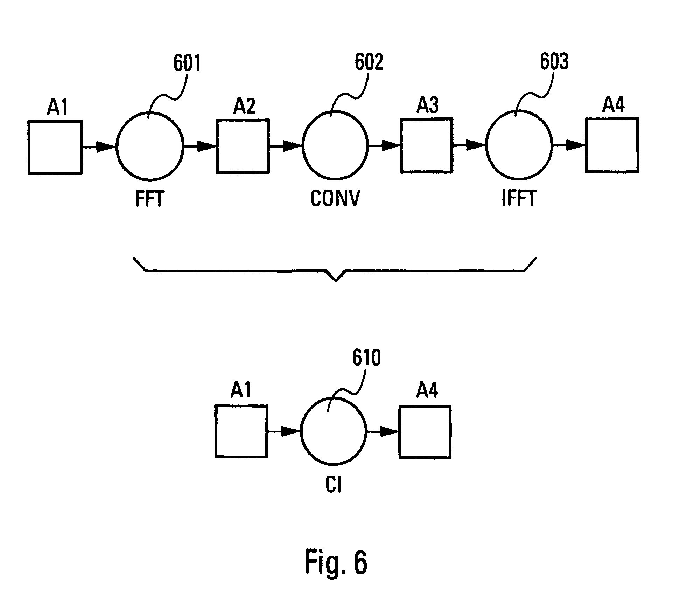

Une application, en particulier de Traitement de signal, est formée de tâches consécutives qui sont composables en une seule "macro-tâche", comme représenté sur l'exemple de composition de tâches de la figure 6. Les tâches successives FFT 601, CONV (convolution) 602 et IFFT (FFT inverse) 603 sont rassemblées en une macro-tâche CI ("Compression d'impulsion") 610. Sur cette figure, on reprend les mêmes conventions que dans la demande de brevet publiée sous le n° FR 2290847, les carrés $A_1,.., A_4$ représentant des tableaux de données et les cercles représentant des tâches.

La figure 7 correspond à un exemple qui définit les connexions relatives à une tâche ARRAY-OL "t" par exemple IFFT. Son expression sous forme ODT est donnée par :

$$(R_1)= \{|\ M|.|S|\ .|\ PRO|\ .|\ G|.\ \overline{SEG}\ .\ |G|\}_t$$

Les connexions liant les résultats de cette tâche t aux opérandes de la tâche précédente t-1, par exemple CONV, s'expriment par :

$$(R_2)= \{|M|.|S|\ .|PRO|.|G|.\ \overline{SEG}.\ |G|\}_{t-1}(R_1)$$

En mettant $(R_2)$ sous la forme d'une expression de même type que $(R_1)$, on définit les motifs, ajustages et pavages de la macro-tâche résultant de la composition des tâches t et t-1. Pour cela, les OE de $(R_2)$ sont modifiés en respectant une règle qui veut que l'on ne peut pas couper de connexion définie par $(R_2)$, mais que l'on peut en rajouter si besoin est .

Les connexions liant les résultats de la nouvelle tâche obtenue t-1, t aux opérandes de la tâche précédente t-2, par exemple FFT, s'expriment par :

$$(R_3) = \left\{ M|.|S|.|PRO|.|G|.\overline{SEG}.|G|. \right\}_{t-2} \left\{ M|.|S|.|PRO|.|G|.\overline{SEG}.|G| \right\}_{t-1,t}$$

En mettant $(R_3)$ sous la torme d'une expression de même type que $(R_1)$, on obtient l'expression ODT de la macro-tâche, par exemple Cl.

**Revendications**

1. Procédé de placement automatique des tâches d'une application dans une machine de traitement de signal comprenant une première étape (101) dans laquelle on part de données structurées en tableaux visualisés sous forme de repères cartésiens (X, Y, Z, T) en mettant en oeuvre au moins une transformation sur ces données (F), on dispose en bibliothèque d'un jeu de transformations élémentaires, on établit pour chaque transformation, en entrée, au moins un tableau d'application opérande, en sortie au moins un tableau d'application résultat, on établit en entrée de chaque transformation élémentaire un motif opérande et en sortie un motif résultat , on met en correspondance, pour chaque axe de coordonnées cartésiennes, au moins deux éléments du motif opérande et du tableau d'application opérande d'une part, du motif résultat et du tableau d'application résultat d'autre part, et on utilise les relations affinées caractéristiques des accès dans les tableaux en traitement de signal pour établir par itération, à l'aide d'un logiciel inclus dans l'outil graphique, à partir d'au moins deux correspondances, l'ensemble des accès nécessaires à l'exécution complète de la transformation considérée, suivie d'une deuxième étape (103) dans laquelle on part d'un tableau d'entrée que l'on échantillonne avec un motif d'entrée selon une relation d'assemblage d'entrée et une relation de pavage d'entrée, on fait subir à chacun de ces motifs une transformation élémentaire TE qui délivre des motifs de sortie (202), et on constitue un tableau de sortie (201) en assemblant ces motifs de sortie selon une relation de pavage de sortie et une relation d'ajustage de sortie, on détermine un premier espace multidimensionnel de sortie comportant un premier ensemble d'axes (Q1, Q0) correspondant aux axes du tableau quotient du tableau de sortie par le motif de sortie considéré lui-même comme un tableau diviseur de sortie, et un deuxième ensemble d'axes (D1, D0) correspondant aux axes de ce tableau diviseur de sortie, ce premier espace comprenant ainsi toutes les sorties du tableau de sortie rangées de manière à pouvoir être parcourues successivement par une incrémentation de l'horloge du processeur, et on détermine une première matrice de projection {MP} de ce premier espace au tableau de sortie, ce qui permet de déterminer automatiquement un premier codage permettant de placer les sorties dans le tableau de sortie, **caractérisé en ce qu'**il est suivi d'une troisième étape (110) mettant en oeuvre un procédé utilisant des Opérateurs de Distribution de Tableau (201), dit ODT, formé d'une chaîne d'Opérateurs Elémentaires (301), dits OE, séparés par des espaces de liaison (302), pour décrire les connexions entre les éléments d'un espace Emetteur (202) Ne, et les éléments d'un espace Récepteur (203) Nr, et **en ce qu'**il utilise 8 Opérateurs Elémentaires OE dont 4 sont directs et 4 sont les miroirs des directs et qui correspondent aux actions suivantes :

   - un Opérateur Elémentaire "Gabarit" qui sert à définir les tailles de tableaux et dont les actions sont "Coupe" (204) et "Prolonge" (205);
   - un Opérateur Elémentaire "Modulo", qui permet de ramener les accès à l'intérieur des tableaux et dont l'action est "Fait converger"(207).
   - un Opérateur Elémentaire "Shift", qui permet de rendre compte des "pavages" ne partant pas sur l'origine du tableau et dont l'action est "Prolonge"(205);
   - un Opérateur Elémentaire "Projection", qui permet d'établir des connexions entre un espace d'entrée Nf et un espace de sortie Nt et dont les actions sont "Prolonge" et "Fait converger";
   - un Opérateur Elémentaire miroir "Gabarit$^{-1}$" qui permet de prolonger ou de couper à paramétrage identique les mêmes connexions que l'Opérateur Elémentaire "Gabarit";
   - un Opérateur Elémentaire "Eclatement", correspondant à l'opérateur miroir "Modulo$^{-1}$", qui fonctionne à l'inverse de l'OE "Modulo" et dont les actions sont "Coupe" et "Multiplie" (206);
   - un Opérateur Elémentaire "Shift$^{-1}$", qui est le miroir d'un Shift direct avec des paramètres de signe opposé;
   - un Opérateur Elémentaire "Segmentation", qui est le miroir de l'opérateur Projection et qui permet de tronçonner un ensemble d'éléments successifs sur une même dimension, et dont les actions sont "Multiplie" et "Coupe".

**Patentansprüche**

1. Verfahren zur automatischen Platzierung der Aufgaben einer Anwendung in einer Signalverarbeitungsmaschine, mit einem ersten Schritt (101), in dem von in Tabellen strukturierten Daten ausgegangen wird, die in Form von kartesischen Bezugspunkten (X, Y, Z, T) angezeigt werden, indem mindestens eine Umwandlung an diese Daten angewendet wird (F), in dem man in einer Bibliothek über einen Satz von Elementarumwandlungen verfügt, in dem für jede Umwandlung am Eingang mindestens eine Operand-Anwendungstabelle und am Ausgang mindestens eine Ergebnis-Anwendungstabelle erstellt wird, in dem am Eingang jeder Elementarumwandlung ein Operand-Motiv und am Ausgang ein Ergebnis-Motiv erstellt wird, in dem für jede Achse von kartesischen Koordinaten mindestens zwei Elemente des Operand-Motivs und der Operand-Ergebnis-Anwendungstabelle einerseits und des Ergebnis-Motivs und der Ergebnis-Anwendungstabelle andererseits einander zugeordnet werden, und in dem die verfeinerten Beziehungen, die für die Zugänge in die Tabellen bei der Signalverarbeitung charakteristisch sind, verwendet werden, um durch Iteration mit Hilfe einer in das graphische Werkzeug integrierten Software ausgehend von mindestens zwei Zuordnungen die Gesamtheit der Zugänge zu erstellen, die für die vollständige Durchführung der betrachteten Umwandlung notwendig sind, und mit einem nachfolgenden zweiten Schritt (103), in dem von einer Eingangstabelle ausgegangen wird, die mit einem Eingangsmotiv entsprechend einer Eingangszusammensetzungsbeziehung und einer Eingangsblockbildungsbeziehung abgetastet wird, jedes dieser Motive einer Elementarumwandlung TE unterzogen wird, die Ausgangsmotive (202) liefert, und eine Ausgangstabelle (201) gebildet wird, indem diese Ausgangsmotive gemäß einer Ausgangsblockbildungsbeziehung und einer Ausgangsjustierbeziehung zusammengesetzt werden, in dem ein erster multidimensionaler Ausgangsraum, der eine erste Gruppe von Achsen (Q1, Q0), die den Achsen der Quotient-Tabelle der Ausgangstabelle entsprechen, durch das Ausgangsmotiv definiert wird, das selbst als eine Ausgangsdivisortabelle angesehen wird, und eine zweite Gruppe von Achsen (D1, D0) aufweist, die den Achsen dieser Ausgangsdivisortabelle entsprechen, wobei dieser erste Raum so alle Ausgänge der Ausgangstabelle aufweist, die so geordnet sind, dass sie nacheinander aufgrund einer Inkrementierung des Taktgebers des Prozessors durchlaufen werden können, und in dem eine erste Projektionsmatrix (MP) dieses ersten Raums in der Ausgangstabelle bestimmt wird, was es ermöglicht, automatisch eine erste Codierung zu bestimmen, wodurch die Ausgänge in der Ausgangstabelle platziert werden können, **dadurch gekennzeichnet, dass** auf den zweiten Schritt ein dritter Schritt (110) folgt, der ein Verfahren startet, das Tabellenverteilungsoperatoren ODT (201) verwendet, gebildet aus einer Kette von Elementaroperatoren OE (301), die durch Verbindungsräume (302) getrennt sind, um die Verbindungen zwischen den Elementen eines Senderaums (202) $N^e$ und den Elementen eines Empfangsraums (203) $N^r$ zu beschreiben, und dass das Verfahren 8 Elementaroperatoren OE verwendet, von denen 4 direkt und 4 die Spiegel der direkten Operatoren sind, und die den folgenden Aktionen entsprechen:

- einem Elementaroperator "Format", der dazu dient, die Größen der Tabellen zu definieren, und dessen Aktionen "Schneiden" (204) und "Verlängern" (205) sind;
- einem Elementaroperator "Modulo", der es ermöglicht, die Zugänge ins Innere der Tabellen zurückzuführen, und dessen Aktion "Konvergieren lassen" (207) ist;
- einem Elementaroperator "Shift", der es ermöglicht, über die "Blockbildungen" zu berichten, die nicht vom Ursprung der Tabelle ausgehen, und dessen Aktion "Verlängern" (205) ist;
- einem Elementaroperator "Projektion", der es ermöglicht, Verbindungen zwischen einem Eingangsraum Nf und einem Ausgangsraum Nt herzustellen, und dessen Aktionen "Verlängern" und "Konvergieren lassen" sind;
- einem Spiegel-Elementaroperator "Format$^{-1}$", der es ermöglicht, bei gleicher Parametrierung die gleichen Verbindungen zu verlängern oder zu unterbrechen wie der Elementaroperator "Format";
- einem Elementaroperator "Aufspaltung", der dem Spiegel-Operator "Modulo$^{-1}$" entspricht, also umgekehrt zum OE "Modulo" arbeitet und dessen Aktionen "Schneiden" und Vervielfältigen" (206) sind;
- einem Elementaroperator "Shift$^{-1}$", der der Spiegel eines direkten Shifts ist, aber Parameter mit entgegengesetzten Vorzeichen besitzt;
- einem Elementaroperator "Segmentierung", der der Spiegel des Operators Projektion ist und der es ermöglicht, eine Gruppe von aufeinanderfolgenden Elementen auf die gleiche Abmessung zu stutzen, und dessen Aktionen "Vervielfältigen" und "Schneiden" sind.

**Claims**

1. Method for automatic placing of the tasks of an application in a signal-processing machine comprising a first stage (101) in which, starting with data structured into tables visually displayed in the form of Cartesian identifiers (X, Y, Z, T), by implementing at least one transformation on these data (F), a set of elementary transforms is available in a library, for each transform, at input, at least one operand application table is established, and, at the output, at least one result application table is established, an operand pattern is established at the input to each elementary transform and a result pattern is established at the exit, for each Cartesian-coordinate axis, at least two elements of the operand pattern and of the operand application table, on the one hand, of the result pattern and of the result application table on the other hand, are put into correspondence, and the refined relations characteristic of the accesses in the tables are used in signal processing in order to establish, by iteration, by the use of software included in the graphics tool, on the basis of at least two correspondences, all the accesses necessary for the complete execution of the transform in question, followed by a second stage (103) in which, starting from an input table which is sampled with an input pattern according to an input-assemblage relationship and an input-paving relationship, each of these patterns is made to undergo an elementary transform ET which delivers output patterns (202), and an output table (201) is made up by assembling these output patterns according to an output-paving relationship and an output-aligning relationship, a first output multidimensional space is determined including a first set of axes (Q1, Q0) corresponding to the axes of the table which is the quotient of the output table and the output pattern, itself regarded as an output-divisor table, and a second set of axes (D1, D0) corresponding to the axes of this output-divisor table, this first space thus comprising all the outputs of the output table ranged in such a way as to be able to be traversed successively by one incrementation of the clock of the processor, and a first matrix for projection {MP} of this first space to the output table is determined, which makes it possible automatically to determine a first coding making it possible to place the outputs in the output table, **characterized in that** it is followed by a third stage (110) implementing a method using Table Distribution Operators (201), called TDOs, formed by a sequence of Elementary Operators (301), called EOs, which are separated by linking spaces (302), in order to describe the connections between the elements of a Sender space (202) $N^e$, and the elements of a Receiver space (203) $N^r$, and **in that** it uses 8 Elementary Operators EO, 4 of which are direct and 4 of which are the mirrors of the direct ones and which correspond to the following actions:

- a "Template" Elementary Operator, which serves to define the table sizes and the actions of which are "Cut" (204) and "Extend" (205);
- a "Modulo" Elementary Operator, which makes it possible to bring down the accesses within the tables and the action of which is "Make converge" (207);
- a "Shift" Elementary Operator, which makes it possible to take into account "pavings" not starting from the origin of the table and the action of which is "Extend" (205);
- a "Projection" Elementary Operator, which makes it possible to establish connections between an input space Nf and an output space Nt, and the actions of which are "Extend" and "Make converge";
- a "Template$^{-1}$" mirror Elementary Operator which makes it possible to extend or to cut, with identical parameter settings, the same connections as the "Template" Elementary Operator;
- an "Exploding" Elementary Operator, corresponding to the "Modulo$^{-1}$" mirror operator, which operates in the opposite way to the "Modulo" EO and the actions of which are "Cut" and "Multiply" (206);
- a "Shift$^{-1}$" Elementary Operator, which is the mirror of a direct Shift with opposite sign parameters;
- a "Segmentation" Elementary Operator, which is the mirror of the Projection operator and which makes it possible to segment a set of successive elements over the same dimension, and the actions of which are "Multiply" and "Cut".

Fig. 1

100 SPECIF UTILISATEUR
101 ARRAY-OL GRAPHIQUE
102 ARRAY-OL HIERARCHIQUE
103 ARRAY-OL LITTERAL (Q/D)
104 TRADUCTION CODE "CIBLE"

100 SPECIF UTILISATEUR → 101 ARRAY-OL GRAPHIQUE → 103 ARRAY-OL LITTERAL (Q/D) → 110 ODT → 104 TRADUCTION CODE "CIBLE"

Fig. 2

EP 1 218 820 B1

Fig. 3

Fig. 4

EP 1 218 820 B1

EP 1 218 820 B1

134    133    132    131    130

| q<br>d rés.<br>d opé.<br><br>G | - | I   I | 0   0 | - | q<br>d rés.<br><br><br>G | - | p rés. | a rés. | - | rés.<br><br><br>G |
|---|---|---|---|---|---|---|---|---|---|---|
| | | OE Segmentation | | | | | OE Segmentation | | | |

**Fig. 5**

Fig. 6

| opé. | - | offset | - | p opé. | 0 | a opé. | - | q<br>d rés.<br>d opé.<br>G | - | p rés. | a rés. | 0 | - | rés. |
|---|---|---|---|---|---|---|---|---|---|---|---|---|---|---|
| M | | S | | | OE Projection | | | | | | OE Segmentation | | | G |

212  211  210  134  200  130

**Fig. 7**